# EUROPÄISCHE PATENTANMELDUNG

(11) **EP 4 494 803 A1**
(43) Veröffentlichungstag der Anmeldung: **22.01.2025**
(21) Anmeldenummer: 23186570.0
(22) Anmeldetag: 20.07.2023
(51) Int. Cl.: B23K 35/36, B23K 35/26

(54) **FLUSSMITTEL UND DIESES UMFASSENDE LOTPASTE**

(71) Anmelder: Heraeus Electronics GmbH & Co. KG, 63450 Hanau (DE)
(72) Erfinder: Käss, Steffen, 63450 Hanau (DE); Neidert, Michael, 63450 Hanau (DE); Loosz, Christian, 63450 Hanau (DE)
(74) Vertreter: Heraeus IP

(57) **Zusammenfassung**

Flussmittel bestehend aus
(i) 30 bis 80 Gew.-% eines oder mehrerer saurer (Meth)acrylcopolymere mit einer Säurezahl im Bereich von 100 bis 350 mg KOH/g und mit einer gewichtsmittleren Molmasse M_{w} im Bereich von 1000 bis 5000,
(ii) 10 bis 60 Gew.-% mindestens eines organischen Lösemittels,
(iii) 0 bis 15 Gew.-% eines oder mehrerer Amine, und
(iv) 0 bis 20 Gew.-% eines oder mehrerer von den Bestandteilen (i) bis (iii) verschiedener Bestandteile;
und Lotpaste bestehend aus 80 bis 92 Gew.-% eines oder mehrerer verschiedener Lote und 8 bis 20 Gew.-% des Flussmittels.

## Beschreibung

Die vorliegende Erfindung betrifft ein Flussmittel für Lotpasten und eine das Flussmittel umfassende Lotpaste, insbesondere für das Befestigen von elektronischen Bauteilen auf Substraten.

Lotpasten, insbesondere Weichlotpasten, finden vor allem in der Fertigung von elektronischen Schaltungen Anwendung und dienen der Herstellung einer mechanischen, elektrischen und thermischen Verbindung zwischen einem elektronischen Bauteil und einem Substrat, genauer gesagt, zwischen dafür vorgesehenen Kontaktflächen derselben.

Beispiele für elektronische Bauteile im Sinne der vorliegenden Patentanmeldung umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten, Antennen, und dergleichen.

Beispiele für Substrate im Sinne der vorliegenden Patentanmeldung umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Üblicherweise wird das elektronische Bauteil über die Lotpaste mit dem Substrat in Kontakt bzw. auf dieses aufgebracht. Die Lotpaste wird erwärmt, um das Lot (Lotmetall, Lotlegierung) in der Paste durch beispielsweise einen Reflow-Prozess aufzuschmelzen. Nach dem Abkühlen und Erstarren des Lots sind elektronisches Bauteil und Substrat fest miteinander verbunden.

Neben Lotpulver enthalten Lotpasten typischerweise Flussmittel. Flussmittel dienen unter anderem dazu, die Oxidschicht auf den Oberflächen des Lotpulvers, des elektronischen Bauteils und des Substrates aufzulösen und so für eine bessere Benetzbarkeit beim Lötprozess zu sorgen.

Bestandteil von Lotpasten bildende Flussmittel basieren typischerweise auf Naturharzen wie insbesondere Kolophonium. Ferner sind üblicherweise organische Lösungsmittel, puffernd wirkende Basen wie Amine und Aktivatoren wie Carbonsäuren oder Halogenverbindungen als Bestandteile in solchen Flussmitteln enthalten.

Aufgabe der Erfindung ist die Bereitstellung einer Lotpaste mit verbesserter Viskositäts- und damit einhergehend verbesserter Lagerstabilität und bevorzugt auch verbesserter Lötbarkeit in Gegenwart von Luft, d.h. mit guter Lötbarkeit, auch ohne besondere Maßnahmen zum Ausschluss von Luftsauerstoff ergreifen zu müssen, wie Vakuumlöten oder Löten unter Schutzgas. Eine hohe Viskositätsstabilität wiederum geht einher mit gleichbleibender Verarbeitbarkeit wie insbesondere gleichbleibende Druckbarkeit.

Die Anmelderin konnte ein die Aufgabe lösendes Flussmittel respektive eine die Aufgabe lösende, das Flussmittel umfassende Lotpaste entwickeln. Dementsprechend besteht die Erfindung in der Bereitstellung eines Flussmittels bestehend aus
(i) 30 bis 80 Gew.-% (Gewichts-%), bevorzugt 35 bis 70 Gew.-% eines oder mehrerer saurer (Meth)acrylcopolymere mit einer Säurezahl im Bereich von 100 bis 350 mg KOH/g und mit einer gewichtsmittleren Molmasse M_{w} im Bereich von 1000 bis 5000,
(ii) 10 bis 60 Gew.-%, bevorzugt 20 bis 50 Gew.-% mindestens eines organischen Lösemittels,
(iii) 0 bis 15 Gew.-%, bevorzugt 4 bis 12 Gew.-% eines oder mehrerer Amine, und
(iv) 0 bis 20 Gew.-% eines oder mehrerer von den Bestandteilen (i) bis (iii) verschiedener Bestandteile.

"(Meth)acryl" bedeutet "Methacryl" und/oder "Acryl".

Der in dieser Beschreibung und in den Beispielen verwendete Ausdruck "Säurezahl" bezieht sich auf eine gemäß DIN EN ISO 2114 in mg KOH/g (Milligramm KOH pro Gramm) bestimmbare Säurezahl (SZ).

Sofern nicht anders vermerkt, handelt es sich bei allen in dieser Beschreibung und in den Beispielen zitierten Normen jeweils um die aktuelle Fassung zum Zeitpunkt des Prioritätsdatums der vorliegenden Patentanmeldung.

Die in dieser Beschreibung und in den Beispielen erwähnte gewichtsmittlere Molmasse M_{w} kann in üblicher dem Fachmann bekannter Weise mittels GPC beispielsweise gemäß DIN 55672-1 (März 2016; vernetztes Polystyrol als immobile Phase, Tetrahydrofuran als flüssige Phase, Polystyrol-Standards, 23°C) bestimmt werden.

Je nach Anwesenheit der Bestandteile (iii) und/oder (iv) kann das Flussmittel dementsprechend aus den Bestandteilen (i) plus (ii) oder (i) plus (ii) plus (iii) oder (i) plus (ii) plus (iv) oder (i) plus (ii) plus (iii) plus (iv) bestehen und bei jeder dieser Alternativen beträgt die Summe der Gew.-% der jeweiligen Bestandteile 100 Gew.-%.

Als Bestandteil (i) umfasst das erfindungsgemäße Flussmittel 30 bis 80 Gew.-%, bevorzugt 35 bis 70 Gew.-% eines oder mehrerer verschiedener saurer (Meth)acrylcopolymere. Bevorzugt handelt es sich um nur ein saures (Meth)acrylcopolymer. Das oder die sauren (Meth)acrylcopolymere haben eine Säurezahl im Bereich von 100 bis 350 mg KOH/g, bevorzugt von 150 bis 300 mg KOH/g. Das oder die sauren (Meth)acrylcopolymere haben eine gewichtsmittlere Molmasse M_{w} im Bereich von 1000 bis 5000, bevorzugt im Bereich von 1000 bis 3000 und insbesondere im Bereich von 1500 bis 2500. Bevorzugt sind saure (Meth)acrylcopolymere mit einer Säurezahl im Bereich von 150 bis 300 mg KOH/g und mit einer gewichtsmittleren Molmasse M_{w} im Bereich von 1000 bis 3000 oder von 1500 bis 2500. Es handelt sich um in üblicher dem Fachmann bekannter Weise durch radikalische Copolymerisation herstellbare Copolymere von (Meth)acrylverbindungen, wobei die Copolymeren auch andere Comonomere als solche vom (Meth)acryl-Typ, wie beispielsweise Vinylverbindungen und/oder andere olefinisch ungesättigte radikalisch copolymerisierbare Verbindungen, in einem Gewichtsanteil von insgesamt < 50 Gew.-%, bezogen auf gesamtes saures (Meth)acrylcopolymer umfassen können. Beispiele für die > 50 Gew.-%, bezogen auf gesamtes saures (Meth)acrylcopolymer, ausmachenden (Meth)acrylverbindungen sind (Meth)acrylsäure, (Meth)acrylsäureester und (Meth)acrylamide. Beispiele für Vinylverbindungen umfassen Verbindungen wie Vinylester, Vinylether, Styrol und dergleichen.

Es ist bevorzugt, wenn das oder die sauren (Meth)acrylcopolymere eine Glasübergangstemperatur (T_{g}) im Bereich von >0°C aufweisen, dabei jedoch im Allgemeinen ≤105°C. Die Bestimmung der Glasübergangstemperatur kann mittels dynamischer Differenzkalorimetrie (DSC) in Anlehnung an DIN 51007 mit einer Aufheizrate von 10K/min erfolgen.

Saure (Meth)acrylcopolymere vorerläuterten Typs sind kommerziell erhältlich. Beispiele dafür findet man unter mit Indurez bezeichneten Produkten von Indulor Chemie GmbH und unter mit Joncryl^{®} bezeichneten Produkten von BASF.

Als Bestandteil (ii) umfasst das erfindungsgemäße Flussmittel 10 bis 60 Gew.-%, bevorzugt 20 bis 50 Gew.-% mindestens eines organischen Lösemittels. Beispiele umfassen bei 25 °C flüssige Diole, Alkohole, Etheralkohole und Ketone, insbesondere Trimethylpropanol, 1,2-Oktandiol, 1,8-Oktandiol, 2,5-Dimethyl-2,5-hexandiol, Isobornylcyclohexanol, Glykolether, 2-Ethyl-1,3-hexandiol, n-Decylalkohol, 2-Methyl-2,4-pentandiol, Terpineol und Isopropanol sowie Mischungen davon. Beispiele für Glykolether umfassen Mono-, Di-, Tripropylenglykolmethylether, Mono-, Di-, Tripropylenglykol-n-butylether, Mono-, Di-, Triethylenglykol-n-butylether, Ethylenglykoldimethylether, Triethylenglykolmethylether, Diethylenglykoldibutylether, Tetraethylenglykoldimethylether und Diethylenglykolmonohexylether sowie Mischungen davon.

Als Bestandteil (iii) umfasst das erfindungsgemäße Flussmittel 0 bis 15 Gew.-%, bevorzugt 4 bis 12 Gew.-% eines oder mehrerer Amine, d.h. das erfindungsgemäße Flussmittel kann ein oder mehrere Amine umfassen oder frei davon sein, bevorzugt sind ein oder mehrere Amine umfasst. Beispiele für Amine umfassen N,N,N',N'-Tetramethylethylendiamin, N,N,N',N'-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, Diethylamin, Triethylamin, Cyclohexylamin, Diethanolamin, Triethanolamin, hydriertes Talg-alkylamin, hydriertes (Talg-alkyl)dimethylamin und hydriertes Bis(talg-alkyl)methylamin.

Als Bestandteil (iv) umfasst das erfindungsgemäße Flussmittel 0 bis 20 Gew.-% eines oder mehrerer von den Bestandteilen (i) bis (iii) verschiedener Bestandteile, d.h. das erfindungsgemäße Flussmittel kann einen oder mehrere Bestandteile vom Typ (iv) umfassen oder frei davon sein. Beispiele für Bestandteile vom Typ (iv) umfassen insbesondere Verdickungsmittel, aber gegebenenfalls auch Aktivatoren, Entschäumer, Benetzungshilfsmittel und/oder Stabilisatoren.

Beispiele für Verdickungsmittel umfassen Ethylcellulose, hydriertes Rizinusöl, Glycerin-tris-12-hydroxystearin und modifiziertes Glycerin-tris-12-hydroxystearin.

Beispiele für als Aktivatoren verwendbare niedermolekulare Carbonsäuren umfassen Benzilsäure, Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure. Es kann zweckmäßig sein, dass das erfindungsgemäße Flussmittel 2 bis 15 Gew.-% mindestens einer niedermolekularen Carbonsäure als Bestandteil vom Typ (iv) umfasst; im Falle einer solchen Ausführungsform können dementsprechend maximal 5 bis 18 Gew.-% weiterer Bestandteile vom Typ (iv) jedoch verschieden von niedermolekularen Carbonsäuren vom erfindungsgemäßen Flussmittel umfasst sein.

Beispiele für als Aktivatoren verwendbare halogenhaltige Verbindungen umfassen Anilinhydrochlorid, Glutaminsäurehydrochlorid, Diethanolaminhydrochlorid, Diethanolaminhydrobromid, Triethanolaminhydrochlorid, Triethanolaminhydrobromid und trans-2,3-Dibrom-2-buten-1,4-diol.

Bevorzugt weist das erfindungsgemäße Flussmittel, d.h. das gesamte aus den Bestandteilen (i) plus (ii) oder (i) plus (ii) plus (iii) oder (i) plus (ii) plus (iv) oder (i) plus (ii) plus (iii) plus (iv) bestehende Flussmittel eine Flussmittel-Säurezahl (FMSZ) im Bereich von 100 bis 250 mg KOH/g, bevorzugt im Bereich von 120 bis 220 mg KOH/g auf. Die in dieser Beschreibung und in den Beispielen erwähnte Flussmittel-Säurezahl kann gemäß IPC TM-650 2.3.13 (von 06/2004 Revision A) bestimmt werden. Die Flussmittel-Säurezahl wird zumindest im Wesentlichen oder vollständig aus den Carboxylgruppen des Bestandteils (i) und den gegebenenfalls durch Bestandteil (iv) beigesteuerten Carboxylgruppen gebildet.

Ferner besteht die Erfindung in der Bereitstellung einer Lotpaste bestehend aus 80 bis 92 Gew.-% eines oder mehrerer verschiedener Lote und 8 bis 20 Gew.-% eines erfindungsgemäßen Flussmittels, d.h. eines erfindungsgemäßen Flussmittels in einer seiner vorerwähnten Ausführungsformen. Die Summe der Gew.-%-Anteile des oder der Lote und des erfindungsgemäßen Flussmittels beträgt dabei 100 Gew.-%.

Die erfindungsgemäße Lotpaste umfasst wie gesagt 80 bis 92 Gew.-% eines oder mehrerer verschiedener Lote, insbesondere Lot(e) auf Zinnbasis (Lotlegierungen umfassend mindestens 80 Gew.-%, vorzugsweise mindestens 83 Gew.-%, insbesondere 90 bis 99,5 Gew.-% Zinn) oder auf Bismut/Zinn-Basis (Lotlegierungen umfassend 50 bis 60 Gew.-% Bismut und 40 bis 50 Gew.-% Zinn).

Es ist bevorzugt, dass das Lot eine Liquidustemperatur in einem Bereich von 150 bis 350°C, vorzugsweise in einem Bereich von 180 bis 300 °C, aufweist.

Das oder die Lote liegen in der erfindungsgemäßen Lotpaste jeweils als Lotpulver vor, wie für Lotpasten üblich. Die Kugelgröße der das Lotpulver ausmachenden Lotkugeln kann dabei jeder der Klassifikationen gemäß der Norm IPC J-STD-005A entsprechen, d.h. die erfindungsgemäße Lotpaste kann Lotkugeln beliebigen Kugelgrößentyps innerhalb des Typenbereichs T1 bis T7 aufweisen.

Vorzugsweise weist die erfindungsgemäße Lotpaste eine Viskosität von 50 bis 250 Pa s auf. Die in dieser Beschreibung und in den Beispielen erwähnte Viskosität kann mit einem Platte-Platte-Rheometer mit einem Plattendurchmesser von 50 mm und einem Messspalt von 400 µm (beispielsweise das Platte-Platte-Rheometer Physica MCR 150 der Firma Anton-Paar). bei 25 °C und bei einer Scherrate von 10 s⁻¹ bestimmt werden.

Ein weiterer Gegenstand der vorliegenden Erfindung ist ein Verfahren zur Herstellung einer erfindungsgemäßen Lotpaste.

Dabei umfasst das Verfahren zur Herstellung einer erfindungsgemäßen Lotpaste die Schritte:
- Mischen der Bestandteile eines erfindungsgemäßen Flussmittels; und
- Zugabe eines Lotpulvers wie vorerwähnt.

Die Zugabe des Lotpulvers erfolgt vorzugsweise in mehreren Portionen unter Rühren zu einer vorgelegten Mischung der Bestandteile des erfindungsgemäßen Flussmittels, im Allgemeinen ohne Erwärmen.

Die erfindungsgemäße Lotpaste kann verwendet werden zum Verbinden von elektronischen Bauteilen mit Substraten. Sie kann auch verwendet werden zur Herstellung von Lotdepots auf Substraten.

Beim Verbinden von elektronischen Bauteilen mit Substraten erfolgt die Kontaktierung der Kontaktfläche des Substrates und der Kontaktfläche des elektronischen Bauteils über die erfindungsgemäße Lotpaste.

Ein Verfahren zur Befestigung eines elektronischen Bauteils auf einem Substrat unter Verwendung einer erfindungsgemäßen Lotpaste kann die folgenden Schritte umfassen:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der Lotpaste,
d) Kontaktieren der Kontaktfläche des elektronischen Bauteils mit der Kontaktfläche des Substrates über die Lotpaste; und
e) Erwärmen der Lotpaste über die Liquidustemperatur des Lots und anschließendes Abkühlen und Erstarren lassen des Lots unter Ausbilden einer festen Verbindung zwischen dem elektronischen Bauteil und dem Substrat.

Die Schritte a) und b) sind selbsterklärend und bedürfen keiner näheren Erläuterung.

In Schritt c) kann die erfindungsgemäße Lotpaste mittels üblicher dem Fachmann bekannter Verfahren auf eine der oder auf beide Kontaktflächen appliziert werden, beispielsweise mittels Sieb- oder Schablonendruck oder Dispensieren oder Jetten.

In Schritt d) können die Kontaktflächen des elektronischen Bauteils und des Substrates über die Lotpaste miteinander kontaktiert werden. Anders ausgedrückt, es kann eine Sandwichanordnung geschaffen werden aus dem elektronischen Bauteil und dem Substrat mit der Lotpaste zwischen deren Kontaktflächen.

In Schritt e) kann die Sandwichanordnung verlötet werden, indem die Lotpaste über die Liquidustemperatur des Lots erwärmt wird, so dass es zur Bildung einer festen Verbindung zwischen dem elektronischen Bauteil und dem Substrat über die Lotpaste nach anschließendem Abkühlen und Erstarren des Lots kommt. Dabei wird die Lotpaste vorzugsweise so erwärmt, dass das Lot in seine Liquidusphase übergeht, jedoch ohne dass es zu einer Schädigung des elektronischen Bauteils und/oder des Substrates kommt. Die Sandwichanordnung respektive die Lotpaste wird vorzugsweise auf eine Temperatur erwärmt, die 5 bis 60 °C, vorzugsweise 10 bis 50 °C, über der Liquidustemperatur des Lots liegt.

Vorteilhafterweise gestattet die das erfindungsgemäße Flussmittel umfassende Lotpaste das Verlöten gemäß Schritt e) unabhängig von der Kugelgröße des in der Lotpaste verwendeten Lotpulvers an der Luft.

### Beispiele

### Herstellung von Flussmitteln und Lotpasten

Die Bestandteile der Flussmittel wurden gemäß Tabelle 1 zusammengefügt und homogenisiert. Für die Herstellung der Lotpasten wurden jeweils 11 Gew.-Teile Flussmittel mit jeweils 89 Gew.-Teilen Lotpulver (SnAgCu: Sn 96,5 Gew.-%, Ag 3,0 Gew.-%, Cu 0,5 Gew.-%, Typ 4 gemäß der Norm IPC J-STD-005A) zu Lotpasten vermischt.

### Benetzungsvermögen unter Luftatmosphäre

Die Benetzungseigenschaften der Lotpasten wurden mit Hilfe des Aufschmelztests gemäß der IPC-TM-650 (1/95) Testmethode 2.4.45 an Luftatmosphäre beurteilt. Dazu wurden die zu testenden Lotpasten auf Kupferbleche (20 mm x 20 mm x 0,5 mm) aufgebracht. Sofern die Kupferbleche eine Oxidschicht auf der Oberfläche aufwiesen, wurden diese mit Schleifpapier der Körnung P600 metallisch blank geschliffen und mit Alkohol gereinigt. Kupferbleche, die eine helle und reine Oberfläche aufwiesen, wurden lediglich mit Alkohol gereinigt.

Die vorbereiteten Kupferbleche wurden mit Hilfe einer Schablone bedruckt. Dazu wurde die Schablone fest auf das Kupferblech gedrückt, so dass sich die Öffnungen der Schablone in der Mitte des Kupferblechs befanden. Die zu testende Lotpaste wurde auf einen Japanspachtel gegeben und zuerst leicht, dann mit etwas mehr Druck über die Öffnungen der Schablone gestrichen, bis sich keine Lotpaste mehr auf der Schablone befand. Dann wurde die Schablone vorsichtig unter Erhalt des durch die Schablone vorgegebenen Musters entfernt. Das bedruckte Kupferblech wurde für 2 Minuten auf eine erste auf eine Temperatur unterhalb der Liquidustemperatur des Lots eingestellte 200 °C heiße Heizplatte gelegt und dann sofort auf eine zweite auf eine 50 °C über der Liquidustemperatur des Lots liegende Temperatur eingestellte Heizplatte gelegt. Nach Aufschmelzen der Lotpaste bzw. des Lots wurde das Kupferblech noch 5 Sekunden auf der zweiten Heizplatte belassen und dann davon entfernt und abgekühlt.

Nach dem Abkühlen der Lotpaste wurde beurteilt, ob diese zu Flecken aufgeschmolzen war, die der Größe der Öffnungen der Schablone entsprachen oder zu mehreren kleinen Flecken, und ob die Lotpaste nach dem Aufschmelzen scharfe Ränder aufwies. Weiterhin wurde beurteilt, ob die Oberfläche glänzend oder matt war.

Die Lotpasten wurden in vier Klassen eingeteilt:
Klasse 1: Die umgeschmolzene Fläche war größer als die zuvor mit Lotpaste bedruckte Fläche.
Klasse 2: Die umgeschmolzene Fläche entsprach der zuvor mit Lotpaste bedruckten Fläche.
Klasse 3: Die umgeschmolzene Fläche war kleiner als die zuvor mit Lotpaste bedruckte Fläche (leichte Entnetzung zu erkennen).
Klasse 4: Die Lotpaste hatte eine oder mehrere Lotkugeln gebildet und das Kupferblech nicht benetzt oder war nicht vollständig aufgeschmolzen.

### Prüfung der Viskositätsstabilität bei Raumtemperatur

Zunächst wurde die initiale Viskosität der jeweils frisch hergestellten Lotpasten bei 25 °C und einer Scherrate von 10 s⁻¹ mit einem Platte-Platte-Rheometer (Physica MCR 150 der Firma Anton-Paar; Plattendurchmesser 50 mm, Messspalt 400 µm) bestimmt. Die Lotpasten wurden anschließend bei Raumtemperatur (23 °C) jeweils in einem verschlossenen Behälter gelagert und nach 7 Tagen erneut wie zuvor angegeben gemessen. Vor der Viskositätsmessung nach 7-tägiger Lagerung wurde jede Lotpaste kurz manuell mit einem Spatel homogen durchmischt. Die Differenz zwischen dem jeweils ersten Messwert, welcher direkt nach Herstellung der jeweiligen Lotpaste aufgenommen wurde, und dem jeweils zweiten Messwert, welcher nach 7-tägiger Lagerung der jeweiligen Lotpaste aufgenommen wurde, wurde wie folgt bewertet:
++ : < 5 Pa·s
+ : 5 Pa·s bis < 10 Pa·s
-: > 10Pa·s

**Tabelle 1: Zusammensetzung der erfindungsgemäßen Flussmittel 1 bis 3 und der Vergleichs-Flussmittel V1 und V2 sowie Messergebnisse**

| **Flussmittel** | **1** | **2** | **3** | **V1** | **V2** |
|---|---|---|---|---|---|
| (Meth)acrylcopolymer 1 | 40 | - | - | - | - |
| M_{W} 1800, SZ 244 mg KOH/g, T_{g} 57°C | | | | | |
| (Meth)acrylcopolymer 2 | - | 40 | - | - | - |
| M_{W} 1900, SZ 250 mg KOH/g, T_{g} 88°C | | | | | |
| (Meth)acrylcopolymer 3 | - | - | 40 | - | - |
| M_{W} 3000, SZ 185 mg KOH/g, T_{g} 76°C | | | | | |
| (Meth)acrylcopolymer 4 | - | - | - | 40 | - |
| M_{W} 6900, SZ 220 mg KOH/g, T_{g} 105°C | | | | | |
| Kolophonium | - | - | - | - | 40 |
| M_{W} 375, SZ 150 mg KOH/g | | | | | |
| Dodecandisäure | 3,5 | 3,5 | 3,5 | 3,5 | 3,5 |
| Benzilsäure | 3,5 | 3,5 | 3,5 | 3,5 | 3,5 |
| N,N,N',N'-Tetramethylethylendiamin | 10 | 10 | 10 | 10 | 10 |
| Diethylenglycolmonohexylether | 40 | 40 | 40 | 40 | 40 |
| Verdicker (Disparlon 6500 von King Industries) | 3 | 3 | 3 | 3 | 3 |
| | | | | | |
| Säurezahl des Flussmittels FMSZ (mg KOH/g) | 120 | 123 | 100 | 118 | 105 |
| Benetzungsvermögen | 2 | 2 | 3 | 3 | 4 |
| Viskositätsstabilität | ++ | ++ | ++ | - | + |

## Patentansprüche

1. Flussmittel bestehend aus
(i) 30 bis 80 Gew.-% eines oder mehrerer saurer (Meth)acrylcopolymere mit einer Säurezahl im Bereich von 100 bis 350 mg KOH/g und mit einer gewichtsmittleren Molmasse M_{w} im Bereich von 1000 bis 5000,
(ii) 10 bis 60 Gew.-% mindestens eines organischen Lösemittels,
(iii) 0 bis 15 Gew.-% eines oder mehrerer Amine, und
(iv) 0 bis 20 Gew.-% eines oder mehrerer von den Bestandteilen (i) bis (iii) verschiedener Bestandteile.

2. Flussmittel nach Anspruch 1, wobei die Säurezahl im Bereich von 150 bis 300 mg KOH/g und die gewichtsmittlere Molmasse M_{w} im Bereich von 1000 bis 3000 liegt.

3. Flussmittel nach Anspruch 1 oder 2, wobei das oder die sauren (Meth)acrylcopolymeren eine Glasübergangstemperatur (T_{g}) im Bereich von >0°C bis ≤105°C aufweisen.

4. Flussmittel nach einem der vorhergehenden Ansprüche, wobei das Flussmittel eine Flussmittel-Säurezahl (FMSZ) im Bereich von 100 bis 250 mg KOH/g aufweist.

5. Lotpaste bestehend aus 80 bis 92 Gew.-% eines oder mehrerer verschiedener Lote und 8 bis 20 Gew.-% eines Flussmittels nach einem der Ansprüche 1 bis 4.

6. Verwendung einer Lotpaste nach Anspruch 5 zum Verbinden von elektronischen Bauteilen mit Substraten oder zur Herstellung von Lotdepots auf Substraten.
